# EUROPÄISCHE PATENTANMELDUNG

(11) **EP 1 905 638 A2**
(43) Veröffentlichungstag der Anmeldung: **02.04.2008**
(21) Anmeldenummer: 07015751.6
(22) Anmeldetag: 10.08.2007
(51) Int. Cl.: B60L 15/20

(54) **Vorrichtung zur Regelung eines Hybrid-Antriebssystems für ein Kraftfahrzeug, insbesondere ein Flurförderzeug**

(30) Priorität: 27.09.2006 DE 102006045502
(71) Anmelder: Jungheinrich Aktiengesellschaft, 22047 Hamburg (DE)
(72) Erfinder: Mänken, Frank, Dr.-Ing., 24558 Henstedt-Ulzburg (DE); Rogg, Andreas, Dipl.-Ing., 23554 Lübeck (DE)
(74) Vertreter: Graalfs, Edo

(57) **Zusammenfassung**

Vorrichtung zur Regelung eines Hybrid-Antriebssystems für ein Kraftfahrzeug, insbesondere ein Flurförderzeug, mit einer Brennkraftmaschine BKM, einem Speicher für elektrische Energie, einer Vorrichtung zur Erfassung des Ladezustands SOC des Speichers, mindestens einer Elektromaschine E1/E2, die mit dem elektrischen Speicher verbindbar ist und mindestens einer Getriebeanordnung, über die die Brennkraftmaschine BKM, die Elektromaschine E1/E2 und mindestens ein Rad des Fahrzeugs miteinander koppelbar sind, mit den folgenden Merkmalen
- ein Soll-Wert-Geber für die Fahrgeschwindigkeit v,
- ein Ist-Wert-Geber für die Fahrgeschwindigkeit v,
- eine erste Regelvorrichtung für die Fahrgeschwindigkeit v und ein Geschwindigkeitsregler für das Soll-Rad-Drehmoment
- eine Drehmoment-Berechnungsstufe, die aus dem Soll-Antriebsmoment M-soll oder einem diesem entsprechenden Signal, die Drehzahl-Soll-Werte für die Brennkraftmaschine BKM sowie die Soll-Werte für die Elektromaschine E1/E2 bestimmt
- eine zweite Regelvorrichtung, die die Brennkraftmaschine BKM derart ansteuert, daß die Regelabweichungen hinreichend klein werden und
- eine dritte Regelvorrichtung, die die Elektromaschine E1/E2 derart ansteuert, daß die Regelabweichungen hinreichend klein werden.

## Beschreibung

Die Erfindung bezieht sich auf eine Vorrichtung zur Regelung eines Hybrid-Antriebssystems für ein Kraftfahrzeug, insbesondere ein Flurförderzeug nach Patentanspruch 1.

Hybrid-Antriebe sind seit längerem bekannt. Sie enthalten typischerweise eine Brennkraftmaschine und mindestens einen Elektromotor, die in Reihe oder parallel auf einer Antriebswelle arbeiten. Zur Kopplung der Antriebsmaschinen ist eine Getriebeanordnung erforderlich, zumeist ein Überlagerungs- und ein Sammelgetriebe.

Aus US 3,566,717 ist ein Antriebssystem mit einer Brennkraftmaschine als primäre Antriebsmaschine und einem Getriebe mit elektrischer Leistungsverzweigung bekannt. Das vom Bediener vorgegebene Signal wird als Soll-Drehmoment am Antriebsrad ausgewertet. Die Elektromaschine wird derart gesteuert, daß die Brennkraftmaschine auch bei variierender Last mit konstanter Drehzahl läuft.

Aus EP 0 867 323 ist ein Verfahren zum Betrieb eines hybriden Antriebssystems bekannt geworden, bei dem die vom Fahrer vorgegebene Pedalposition als Leistungswunsch am Antriebsrad interpretiert wird. Das Soll-Raddrehmoment wird als Funktion des Pedalwertes (Fahrer-Wunschdrehmoment) und der Ist-Fahrgeschwindigkeit aus einem Kennfeld bestimmt. Mit der Ist-Fahrgeschwindigkeit wird aus dem Soll-Raddrehmoment die Soll-Antriebsleistung bestimmt. Aus einer vorab festgelegten Drehmoment-Drehzahl-Kennlinie der Brennkraftmaschine wird eine verbrauchsgünstige Kombination von Drehmoment und Drehzahl ausgelesen, die die Soll-Antriebsleistung erfüllt. Nachteilig bei diesem Verfahren ist, daß der Fahrer die Fahrgeschwindigkeit mit der Vorgabe des Drehmoments bzw. der Leistung am Rad selbst einregeln muß.

Der Erfindung liegt die Aufgabe zugrunde, eine Vorrichtung zur Regelung eines Hybrid-Antriebssystems für ein Kraftfahrzeug, insbesondere eines Flurförderzeugs zu schaffen, die den Brennstoffverbrauch minimiert und dafür sorgt, daß Brennkraftmaschine und Elektromaschine nur mit zulässigen Drehmomenten beaufschlagt werden. Außerdem soll das Fahrverhalten des Fahrzeugs verbessert werden.

Diese Aufgabe wird durch die Merkmale des Patentanspruchs 1 gelöst.

Bei der erfindungsgemäßen Vorrichtung gibt der Sollwertgeber ein Soll-Signal für die Fahrgeschwindigkeit vor. Wahlweise kann eine Drehzahlvorgabe vorgesehen werden, wenn die Getriebeanordnung einen vorgegebenen Zusammenhang zwischen Geschwindigkeitsvorgabe und Rad-Drehzahl herstellt. Eine erste Regelvorrichtung vergleicht die Soll-Fahrgeschwindigkeit mit der Ist-Geschwindigkeit und erzeugt daraus ein Soll-Raddrehmoment. Alternativ kann auch eine Soll-Antriebskraft oder eine Soll-Antriebsleistung ermittelt werden. Der ersten Regelvorrichtung ist eine Drehmoment-Berechnungsstufe nachgeschaltet, die aus dem Soll-Antriebsmoment oder einem diesem entsprechenden Signal, den kinematischen Bedingungen der Getriebeanordnung und der dazu benötigten Ist-Drehzahl der Elektromaschine und/oder der Fahrgeschwindigkeit die Drehmoment-Sollwerte für die Brennkraftmaschine und für den mindestens einen Elektromotor bestimmt. Das "entsprechende Signal" steht in einem formelhaften Zusammenhang mit dem Soll-Antriebsmoment. Eine erste Kennlinienstufe mit mindestens einer Kennlinie ordnet den Soll-Drehmomenten der Brennkraftmaschine annähernd optimale Drehzahlen zu, wodurch ein Soll-Signal für die Drehzahl der Brennkraftmaschine erhalten wird. Eine zweite Regelvorrichtung führt einen Vergleich der Soll- und Ist-Werte der Drehzahl der Brennkraftmaschine durch und steuert diese derart an, daß die Regelabweichungen hinreichend klein werden. Eine dritte Regelvorrichtung vergleicht Soll- und Ist-Werte der Drehmomente bzw. auch Ströme der Elektromaschine und steuert diese derart an, daß die Regelabweichungen hinreichend klein werden.

Das Antriebssystem kann bei der erfindungsgemäßen Vorrichtung unterschiedliche Konstellationen der Leistungs- und Getriebeteile haben. Eine besteht etwa darin, daß die Getriebeanordnung mindestens ein Schalt- oder Verstellgetriebe aufweist, dessen Eingang mit der Abtriebswelle der Brennkraftmaschine und dessen Ausgang mit der Abtriebswelle des Antriebssystems gekoppelt ist. Mindestens ein erstes Sammelgetriebe ist vorgesehen, dessen Eingänge mit der Abtriebswelle des Schalt- bzw. Verstellgetriebes und der Abtriebswelle der Elektromaschine gekoppelt sind und dessen Ausgang mit der Abtriebswelle des Antriebssystems gekoppelt ist. Alternativ ist mindestens ein erstes Sammelgetriebe vorgesehen, dessen Eingänge mit der Abtriebswelle der Brennkraftmaschine und der Abtriebswelle der Elektromaschine gekoppelt sind und dessen Ausgang mit der Abtriebswelle des Antriebssystems gekoppelt ist. Im Zuge der Abtriebswelle des Antriebssystems ist mindestens ein Schalt- oder Verstellgetriebe angeordnet.

Schließlich kann bei einer dritten Alternative ein erstes Sammelgetriebe vorgesehen werden, dessen Eingang mit der Abtriebswelle der Brennkraftmaschine und der Abtriebswelle einer ersten Elektromaschine gekoppelt ist und dessen Ausgang mit der Abtriebswelle des Antriebssystems gekoppelt ist. Mindestens ein Schalt- oder Verstellgetriebe ist mit seinem Eingang mit der Abtriebswelle des ersten Sammelgetriebes gekoppelt. Es ist ein zweites Sammelgetriebe vorgesehen, dessen Eingänge mit der Abtriebswelle des Schalt- oder Verstellgetriebes und der Abtriebswelle einer zweiten Elektromaschine gekoppelt sind. Deren Ausgang ist mit der Abtriebswelle des Antriebssystems gekoppelt. Die erwähnte erste Kennlinienstufe ordnet den Drehmoment-Sollwerten aus der Drehmomentberechnungsstufe optimale Drehzahlen für die Brennkraftmaschine zu. Die erste Kennlinienstufe kann eine weitere Kennlinie aufweisen, die den Fahrgeschwindigkeit Sollwerten Soll-Drehzahlen der Brennkraftmaschine zuordnet, wobei die aus den einzelnen Kennlinien ermittelten Soll-Drehzahlwerte für die Brennkraftmaschine miteinander verknüpft werden zur Ermittlung eines Soll-Drehzahlwerts für die Brennkraftmaschine. Die Verknüpfung kann in einer Addition der beiden Werte bestehen.

Die erste Kennlinienstufe kann mindestens ein Kennlinienfeld aufweisen, das Wertepaaren von Fahrgeschwindigkeits-Sollwerten und Drehmomente-Sollwerten der Brennkraftmaschine optimale Drehzahlen zuordnet für die Erzeugung einer Soll- Drehzahl der Brennkraftmaschine. In der ersten Kennlinienstufe kann auch ein Drehzahl-Drehmoment-Wirkungsgrad-Kennfeld für die Elektromaschine gespeichert sein, welches bei der Ermittlung der Drehzahl-Sollwerte für die Brennkraftmaschine berücksichtigt wird. Die erste Kennlinienstufe kann außerdem ein Drehzahl-Drehmoment-Wirkungsgrad-Kennfeld für das Schalt- oder Verstellgetriebe enthalten, das bei der Ermittlung der Drehzahl-Sollwerte für die Brennkraftmaschine berücksichtigt wird.

Den Wertepaaren von Soll-Raddrehmoment und Soll-Fahrgeschwindigkeit können Verbrauchswerte der Brennkraftmaschine BKM zugeordnet sein, so daß die Kennlinienstufe ein Signal für den zu erwartenden Momentanverbrauch ausgeben kann. Für die verschiedenen. Betriebsarten kann jeweils ein Kennlinienfeld vorgesehen sein. Das Signal des Momentanverbrauchs kann von einer Betriebsstrategiestufe zur Entscheidung der Umschaltung zwischen den Betriebsarten herangezogen werden. Weitere Soll- oder Istgrößen können zur Ermittlung der Drehzahl-Sollwerte der Brennkraftmaschine herangezogen werden.

Zwischen dem Sollwertgeber und der ersten Regelvorrichtung kann ein sogenannter Rampengenerator geschaltet werden, der die Dynamik des Soll-Signals begrenzt bzw. nach einer vorgegebenen Kennlinie auf die erste Regelvorrichtung schaltet.

In einer weiteren Ausgestaltung der Erfindung kann eine zweite Kennlinienstufe vorgesehen werden, in der zumindest eine Drehmoment-Drehzahl-Kennlinie der Brennkraftmaschine gespeichert ist zur Bestimmung eines möglichen Abgabe-drehmoments der Brennkraftmaschine aus dem Drehzahl-Ist-Wert der Brennkraftmaschine unter Berücksichtigung des Vergleichs von Soll- und Ist-Wert der Drehzahl der Brennkraftmaschine und deren Trägheitsmoment. Bekanntlich weist die Brennkraftmaschine ein erhebliches Trägheitsmoment auf, vor allen Dingen wenn eine Schwungscheibe vorhanden ist, wodurch zwischen Vorgabe eines Stellsignals durch den Regler und Erreichen der Soll-Drehzahl eine Übergangszeit verstreicht.

Bei mehreren Kennlinien in der ersten und/oder zweiten Kennlinienstufe kann eine Umschaltung zwischen den Kennlinien vorgesehen werden. Diese Umschaltung kann manuell durch das Fahrgeschwindigkeits-Signal des Sollwertgebers ausgelöst werden und/oder automatisch durch dessen Betätigungsgeschwindigkeit.

Die Drehmoment-Berechnungsstufe kann eine Reihe von Unterstufen aufweisen. In einer Unterstufe wird das Soll-Drehmoment für die Elektromaschine bestimmt und/oder begrenzt, die an ein zwangsläufiges Sammelgetriebe oder ein überbrücktes Überlagerungsgetriebe angeschlossen ist, indem das Soll-Drehmoment der Elektromaschine derart bestimmt wird, daß das Ausgangsdrehmoment des Getriebes den zur Erfüllung des Raddrehmoments benötigten Wert annimmt, wobei das mögliche Abgabedrehmoment der Brennkraftmaschine, das in der zweiten Kennlinienstufe ermittelt wird; berücksichtigt wird. Bei der Berechnung der Soll-Drehmomente der Elektromaschine kann auch deren Wirkungsgrad berücksichtigt werden sowie der Umstand, daß sich die Drehmomente mit der Drehzahl ändern (Drehzahl-Drehmoment-Kennlinie).

Alternativ kann in der Unterstufe das Soll-Drehmoment für die Elektromaschine bestimmt oder begrenzt werden, die an ein Überlagerungsgetriebe angeschlossen ist. Das Soll-Drehmoment der Elektromaschine wird derart bestimmt, daß die mit dem Getriebeeingang verbundene Brennkraftmaschine nur bis zum möglichen Abgabedrehmoment der Brennkraftmaschine, das in der zweiten Kennlinienstufe ermittelt wird, belastet wird.

In einer anderen Ausführung werden in einer Unterstufe die Soll-Drehmomente der an ein erstes Sammelgetriebe angeschlossenen ersten Elektromaschine und der an ein zweites Sammelgetriebe angeschlossenen zweiten Elektromaschine bestimmt und/oder begrenzt werden, wenn das zwischen den Sammelgetrieben angeordnete Schalt- oder Verstellgetriebe neutral geschaltet ist. Die bei der ersten Elektromaschine generatorisch erzeugte elektrische Leistung wird in einem seriellen Mode von der zweiten Elektromaschine verbraucht, und die mit dem ersten Sammelgetriebe verbundene Brennkraftmaschine wird nur bis zum möglichen Abgabedrehmoment der Brennkraftmaschine, das in der zweiten Kennlinienstufe ermittelt wird, belastet.

Schließlich kann in einer Unterstufe der Drehmoment-Berechnungsstufe das Soll-Drehmoment für eine Elektromaschine bestimmt und/oder begrenzt werden, die an ein zwangsläufiges Sammelgetriebe oder ein überbrücktes Überlagerungsgetriebe angeschlossen ist, indem das Soll-Drehmoment der Elektromaschine derart bestimmt wird, daß das gesamte Ausgangsdrehmoment des Getriebes allein von der Elektromaschine erzeugt wird und den zur Erfüllung des Raddrehmoments benötigten Wert annimmt.

Der Einsatz der Elektromaschine wird auch durch den Ladezustand des Speichers bestimmt. Ist der Speicher nahezu entladen, ist es nicht möglich, die Elektromaschine zur Erzeugung eines Anteils des Antriebsmoments des Fahrzeugs heranzuziehen. Umgekehrt kann die Elektromaschine nicht für die Aufladung des Speichers herangezogen werden, wenn der Speicher im wesentlichen vollständig aufgeladen ist. Daher sieht eine Ausgestaltung der Erfindung vor, daß eine Vorrichtung zur Bestimmung des Ladezustands vorgesehen ist und das Signal der Vorrichtung die zulässige Lade- oder Entladeleistung des elektrischen Speichers vorgibt. Dieses Signal wird zweckmäßigerweise in die Drehmoment-Berechnungsstufe gegeben.

Für die Berechnung der Soll-Drehmomente für die Elektromaschine kann die Lade- oder Entladeleistung des elektrischen Speichers in einen Wert für eine Dauerleistung und einen Wert für eine kurzzeitige Leistung geteilt werden. Die Kompensation der Differenz des Soll-Drehmoments und des möglichen Abgabe-drehmoments der Brennkraftmaschine erfolgt mit dem Wert für eine kurzzeitige Lade- oder Entladeleistung.

Bei der erfindungsgemäßen Vorrichtung kann eine vierte Kennlinienstufe vorgesehen werden, in der mindestens eine Drehmoment-Drehzahl-Kennlinie einer Elektromaschine gespeichert ist. Aus dem Drehzahl-Ist-Wert der Elektromaschine kann das mögliche Abgabedrehmoment der Elektromaschine bestimmt werden, gegebenenfalls unter Berücksichtigung des Vergleichs von Soll- und Ist-Drehzahl der Elektromaschine und deren Trägheitsmoment. Die Drehmoment-Berechnungsstufe kann in diesem Zusammenhang eine zweite Drehmoment-Begrenzungsstufe aufweisen, welche die Soll-Drehmomente der Elektromaschine auf die in der vierten Kennlinienstufe ermittelten Werte begrenzt.

Es versteht sich, daß insbesondere für den Betrieb der Elektromaschine deren Temperatur einen Einfluß auf die Drehmoment-Anforderung an das Antriebsaggregat hat. Daher wird in einer weiteren Ausgestaltung der Erfindung vorgeschlagen, daß in der zweiten Drehmoment-Begrenzungsstufe die zulässige Verlustleistung der Elektromaschine bestimmt wird, indem die Ist-Temperatur gemessen oder berechnet und mit einer zulässigen Maximaltemperatur verglichen wird, wonach daraus gegebenenfalls mit einer Kennlinie ein Begrenzungsfaktor für das Soll-Drehmoment bestimmt und das zulässige Soll-Drehmoment für die Elektromaschine entsprechend begrenzt wird.

Nach einer anderen Ausgestaltung der Erfindung ist vorgesehen, daß in der ersten Kennlinienstufe Soll-Drehzahlen für eine erste oder zweite Elektromaschine ermittelt werden, in der zweiten Regelvorrichtung das Drehmoment der Brennkraftmaschine geregelt wird und in der dritten Regelvorrichtung die Drehzahl der einen sowie das Drehmoment der anderen Elektromaschine geregelt wird.

Nach einer anderen Ausgestaltung der Erfindung kann eine Betriebsartwechselstufe zur Überbrückung eines Überlagerungsgetriebes vorgesehen sein, und eine fünfte Steuer- oder Regelvorrichtung steuert die Betätigung der Schaltelemente der Überbrückungseinrichtung. Die Betriebsart der Wechselstufe kann zum Trennen oder Schließen von Kupplungen oder Bremsen ausgelegt sein, und eine Steuer- oder Regelvorrichtung steuert die Betätigung der Schaltelemente für die Kupplungen oder Bremsen. Außerdem kann die Betriebsart der Wechselstufe das Antriebssystem durch Betätigung von Kupplungen und Bremsen in einen seriellen Betrieb schalten, bei dem die von der Brennkraftmaschine erzeugte Leistung elektrisch von der ersten Elektromaschine, die als Generator arbeitet, auf die zweite Elektromaschine, die als Fahrmotor arbeitet, übertragen wird.

Die Betriebsartwechselstufe kann das Antriebssystem durch Betätigung von Kupplungen und Bremsen in einen leistungsverzweigten Betrieb schalten, bei dem ein Teil der von der Brennkraftmaschine erzeugten Leistung elektrisch von der ersten Elektromaschine, die als Generator bzw. Motor arbeitet, auf die zweite Elektromaschine, die als Motor oder Generator arbeitet, übertragen wird. Der andere Teil der Leistung wird mechanisch über die Getriebewellen zur Abtriebswelle des Antriebssystems übertragen.

Die Betriebsartwechselstufe kann das Antriebssystem durch Betätigung von Kupplungen und Bremsen in einen parallelen Betrieb schalten, bei dem sich die von der Brennkraftmaschine und von zumindest einer Elektromaschine erzeugte Leistung summieren.

Ferner kann die Betriebsartwechselstufe das Antriebssystem durch Betätigung von Kupplungen und Bremsen in einen rein elektrischen Betrieb schalten, wobei die Brennkraftmaschine ausschaltbar ist.

Für die verschiedenen Betriebsarten können unterschiedliche Regler, Kennlinienstufen und Drehmoment-Berechnungsstufen vorgesehen werden. Schließlich kann eine Betriebsstrategiestufe vorgesehen sein, die aus Eingangssignalen die für den jeweiligen Betriebszustand die vorteilhafteste Betriebsart bestimmt und eine nachfolgende Betriebsartwechselstufe ansteuert. Um einen ruckfreien Übergang von einer Betriebsart in die andere zu erzielen, kann der Sollwert für die Drehzahl der Brennkraftmaschine entsprechend geändert werden.

Die Betriebsstrategiestufe kann den Energieverbrauch in den Betriebsarten ermitteln und vergleichen und Soll-Signale für die Betriebsartwechselstufe erzeugen, um in die voraussichtlich günstigste Betriebsart zu wechseln. Zur Vermeidung von Pendelschaltungen können Hysteresen vorgesehen sein. Den Wertepaaren von Soll-Raddrehmoment und Soll-Fahrgeschwindigkeit können Verbrauchswerte der Brennkraftmaschine BKM zugeordnet sein, wodurch die Kennlinienstufe ein Signal des zu erwartenden Momentanverbrauchs ausgeben kann. Für die verschiedenen Betriebsarten kann jeweils ein Kennlinienfeld vorgesehen sein. Das Signal des Momentanverbrauchs kann von der Betriebsstrategiestufe zur Entscheidung der Umschaltung zwischen den Betriebsarten herangezogen werden. Je nach Betriebsart und Ladezustand des Speichers wird entschieden, ob der Speicher ge- oder entladen wird. Dies geschieht nach Maßgabe der dritten Kennlinienstufe.

Das erfindungsgemäße Antriebssystem kann auch zum Antrieb bei einer Pumpe für ein Hydrauliksystem im Fahrzeug verwendet werden, insbesondere bei einem Flurförderzeug. Mit einem Bedienelement für die Vorgabe der Soll-Geschwindigkeit einer Arbeitsfunktion (z.B. Hubgeschwindigkeit) wird ein Signal erhalten, das in einer Berechnungsstufe mit den kinematischen Bedingungen des Getriebes und den Ist-Drehzahlen der Elektromaschine ein Drehzahl-Sollwert für die Brennkraftmaschine bestimmt. In einer Maximalwertstufe kann der größere von beiden Drehzahl-Sollwerten für die Fahr- und Arbeitsfunktion bestimmt und an die Regelvorrichtung für die Drehzahl der Brennkraftmaschine weitergegeben werden. Möglich ist auch ein rein elektromotorisches Heben.

Die erfindungsgemäße Vorrichtung dient der Regelung eines Antriebssystems aus einer Brennkraftmaschine und einer oder mehreren Elektromaschinen. Sie verfügt über einen Geschwindigkeitsregelkreis, einer Kennlinienstufe zur Bestimmung der Soll-Drehzahl der Brennkraftmaschine und einer Stufe zur Soll-Drehmoment-Berechnung. Die Elektromaschine kann an ein zwangsläufiges Getriebe oder an ein Überlagerungsgetriebe angeschlossen sein oder in einem seriellen Mode arbeiten. Mit Hilfe der erfindungsgemäßen Vorrichtung ist es möglich, einen Hybrid-Antrieb so zu regeln, daß der Brennstoffverbrauch minimiert wird und die Brennkraftmaschine und die Elektromaschine nur mit zulässigen Drehmomenten beaufschlagt werden.

Ausführungsbeispiele der Erfindung werden nachfolgend anhand von Zeichnungen näher erläutert.
- Fig. 1: zeigt ein Schaltschema eines Anwendungsbeispiels einer Vorrichtung nach der Erfindung.
- Fig. 2: zeigt ein Schaltschema eines zweiten Anwendungsbeispiels einer Vorrichtung nach der Erfindung.
- Fig. 3: zeigt ein Schaltschema einer dritten Anwendungsmöglichkeit der Vorrichtung nach der Erfindung.
- Fig. 4: zeigt ein Regelungsschema zum Betrieb der Ausführungsformen nach den Fign. 1 bis 3.
- Fig. 5: zeigt ein gegenüber Fig. 4 modifiziertes Regelungsschema für die Ausführungsformen nach den Fign. 1 bis 3.
- Fig. 6: zeigt Kurven für Ladeleistung und Entladeleistung eines Speichers in den Ausführungsformen nach den Fign. 1 bis 3.
- Fig. 7: zeigt ein Schaltschema zur Soll-Drehmoment-Begrenzung einer Elektromaschine in den Vorrichtungen nach den Fign. 1 bis 3.

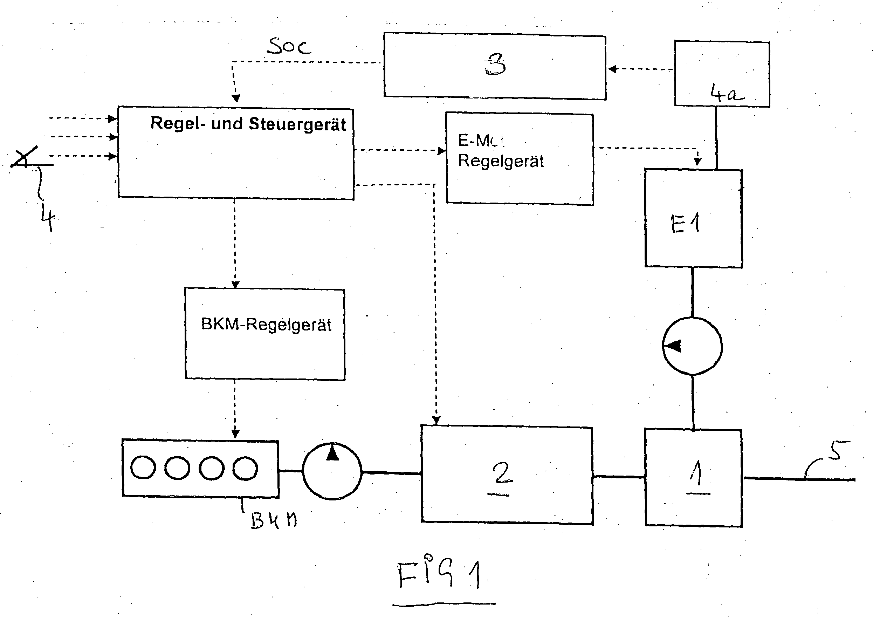

In Fig. 1 ist ein Hybrid-Antriebssystem, z.B. für ein Flurförderzeug, schematisch dargestellt. Es enthält eine Brennkraftmaschine BKM und eine Elektromaschine E1. Die Elektromaschine arbeitet auf ein Sammelgetriebe 1, das mit dem Ausgang eines Umschalt- oder Verstellgetriebes 2 gekoppelt ist, das seinerseits mit der Welle der Brennkraftmaschine BKM gekoppelt ist. Die Elektromaschine E1 wird von einem elektrischen Speicher 4a versorgt. Ihr Ladezustand SOC wird von einem Gerät 3 erfaßt, dessen Ausgangssignal auf ein Regel- und Steuergerät für den Hybrid-Antrieb gelangt. Das Regel- und Steuergerät steuert bzw. regelt die Brennkraftmaschine BKM und den Elektromotor E1 über ein BKM-Regelgerät und ein E-Maschine-Regelgerät. Ein Sollwert-Geber 4, der z.B. von einem Pedal des Fahrzeugs gebildet ist, erzeugt einen Sollwert für die Geschwindigkeit v des Fahrzeugs.

Die Ausführungsform nach Fig. 2 unterscheidet sich von der nach Fig. 1 dadurch, daß sowohl Elektromaschine E1 als auch Brennkraftmaschine BKM mit dem Sammelgetriebe 2 gekoppelt sind, dessen Ausgang mit dem Umschalt- oder Verstellgetriebe 1 gekoppelt ist, das mit der Abtriebswelle 5 des Antriebssystems gekoppelt ist.

Die Ausführungsform nach Fig. 3 unterscheidet sich von der nach Fig. 2 dadurch, daß zwei Elektromaschinen E1 und E2 vorgesehen sind, die jeweils auf ein Sammelgetriebe 2.1 bzw. 2.2 arbeiten. Das Umschalt- oder Verstellgetriebe 1 befindet sich zwischen den Sammelgetrieben 2.1 und 2.2. In das Regel- und Steuergerät gelangt außerdem das Signal eines weiteren Sollwert-Gebers 6 für eine Arbeitsfunktion, beispielsweise zum Heben und Senken eines Lastaufnahmemittels des Flurförderzeugs.

Nachstehend soll das Schaltbild nach Fig. 4 erläutert werden. Mit dem Sollwert-Geber bzw. Pedal 4 wird, wie erwähnt, ein Sollwert für die Geschwindigkeit v für das Fahrzeug vorgegeben. Es ist mit v-soll-roh bezeichnet. Es gelangt auf einen Rampengenerator, in dem z.B. ein Sprungsignal vom Pedal erst allmählich auf die endgültige Höhe gefahren wird. Dies ist an sich bekannt. Dieser Sollwert wird in einem Soll-Ist-Wert-Vergleich mit der Ist-Geschwindigkeit v-ist verglichen, die von einem nicht gezeigten Ist-Wert-Geber für die Fahrzeuggeschwindigkeit erzeugt wird. Die Regelabweichung gelangt auf einen Geschwindigkeitsregler (V-Regler), welcher ein Soll-Moment M-soll erzeugt. Das Soll-Moment geht auf einen Block Drehmomentberechnung bzw. Drehmomentbegrenzung, von dem noch Details später zu erläutern sind. In der Drehmomentberechnung wird ein Soll-Wert für das Moment der Brennkraftmaschine BKM erzeugt, nämlich M-BKM-soll der in einer Kennlinienstufe diesen Sollwert für eine Drehzahl n1 umwandelt.

Der Sollwert v-soll-roh wird außerdem in einer Kennlinienstufe in ein Drehzahlsignal n2 umgewandelt. Die Drehzahlsignale n2 und n1 werden bei 7 addiert zu einem Drehzahl-Sollwert für die Brennkraftmaschine BKM. In der Kennlinienstufe wird mittels mindestens einer darin abgelegten Kennlinie den Drehmoment-Sollwerten der Brennkraftmaschine BKM annähernd optimale Drehzahlen zugeordnet. In der zweiten Stufe der erwähnten Kennlinienstufe, in der wiederum mindestens eine Kennlinie abgelegt ist, werden den Fahrgeschwindigkeit-Sollwerten v-soll-roh Solldrehzahlen der Brennkraftmaschine zugeordnet. Die erwähnten Drehzahlwerte werden, wie erwähnt, bei 7 verknüpft und als Drehzahl-Sollwert auf den Drehzahlregler BKM gegeben. Von einem der Brennkraftmaschine zugeordneten Ist-Wert-Geber gelangt der Drehzahl-Ist-Wert auf einen Soll-Ist-Wert Vergleich, auf den auch der Drehzahl-Sollwert gegeben wird. Die Abweichung zwischen Soll- und Ist-Wert gelangt auch auf ein Motormodell. Hier wird berücksichtigt, daß der Brennkraftmaschine eine Trägheit eigen ist, welche sich in einem Zeitverzug ausdrückt zwischen Vorgabe des Drehzahl-Sollwertes und seinem Erreichen. In einer weiteren Kennlinienstufe (Motor-Drehmoment-Kennlinie) ist abgelegt, bei welchen Ist-Drehzahlen der Brennkraftmaschine BKM der maximale Drehmomentwert erreicht ist. Ein entsprechender Grenzwert M-BKM-Grenz wird ebenfalls auf das Motormodell gegeben zur Erzeugung eines den jeweiligen Betriebszustand der Brennkraftmaschine entsprechenden Signals M-BKM-begr. Dieses Signal wird bei der Drehmoment-Berechnung für die Elektromaschine ebenso berücksichtigt, wie der Ist-Wert der Geschwindigkeit v-ist und der Ladezustand SOC des elektrischen Speichers. In der Drehmoment-Berechnung werden außerdem Soll-Drehmomente für die Drehmoment-Regler für zwei Elektromaschinen E1 und E2 erzeugt. Die der Brennkraftmaschine zugeordnete Regelvorrichtung steuert die Brennkraftmaschine derart an, daß die Regelabweichungen hinreichend klein werden. Die Regelvorrichtungen für die Elektromaschinen E1 und E2 werden in gleicher Weise angesteuert, daß die Regelabweichungen hinreichend klein werden.

Wie schon erwähnt, dient die Kennlinienstufe in Fig. 4 der Zuordnung der Drehmoment-Sollwerte zu optimalen Drehzahlen. Außerdem ist erforderlich, das Übersetzungsverhältnis der Getriebeanordnung zu berücksichtigen. Die gemessene Geschwindigkeit ist naturgemäß nicht gleich einer bestimmten Drehzahl, sondern hängt vom Übersetzungsverhältnis ab. Dies wird in dem linken Block in Fig. 4 (v-Fzg/Motordrehzahlkennfeld) abgebildet.

Bei der Berechnung der Soll-Drehmomente ist auch der Ladezustand SOC des in Fig. 4 nicht dargestellten elektrischen Speichers von Bedeutung. Dies ist in Fig. 4 dadurch angedeutet, daß eine Leitung (Signal SOC) mit der Drehmoment-Berechnung verbunden ist.

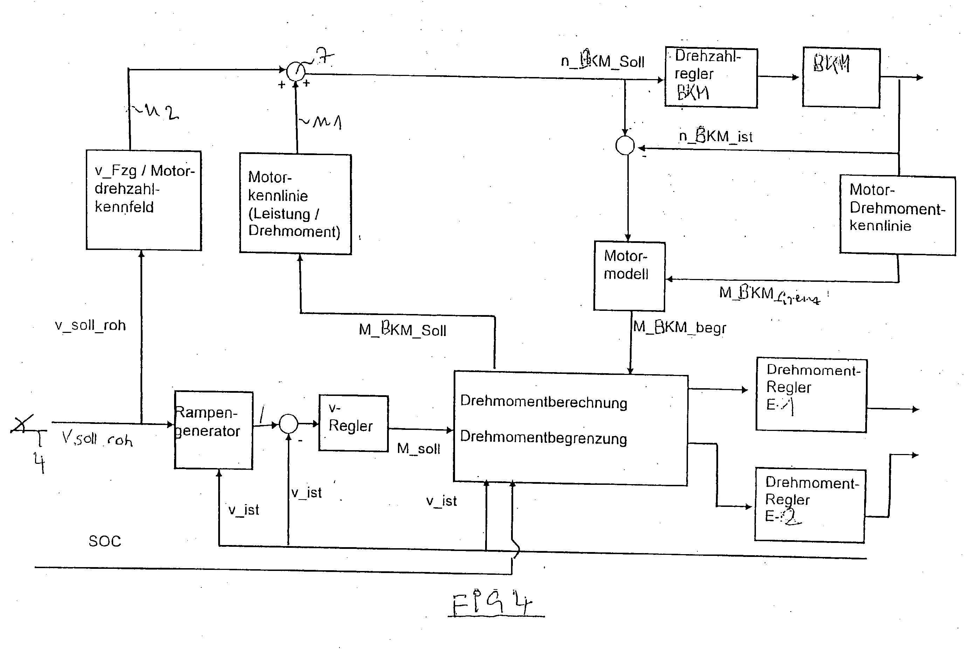

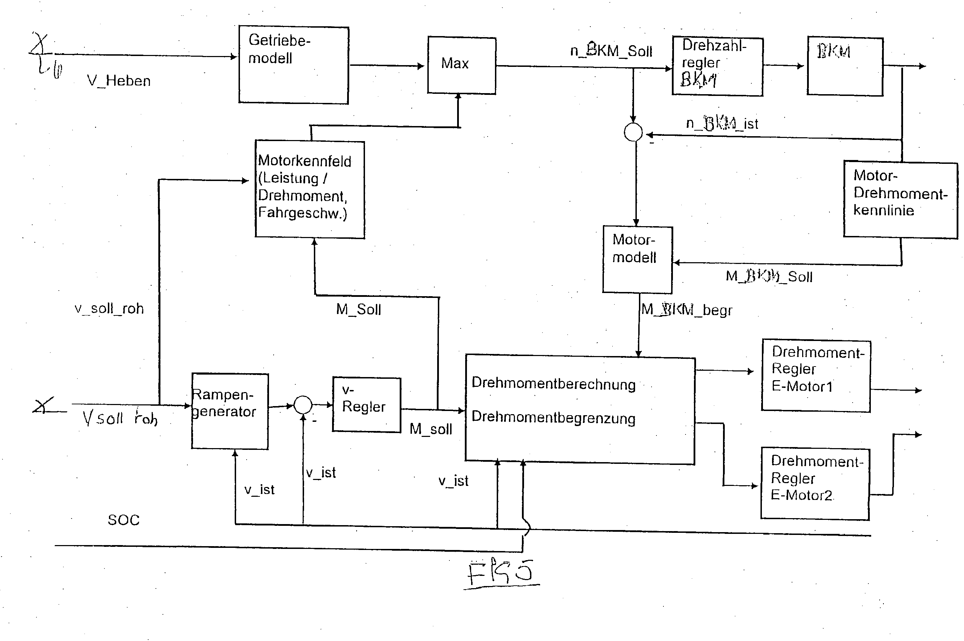

In Fig. 6 sind zwei Kennlinien für Ladeleistung und Entladeleistung aufgezeichnet. Bekanntlich bewegt sich der optimale Arbeitsbereich üblicher elektrischer Speicher zwischen 20% und 80% der Ladung. Mit anderen Worten, der Speicher sollte nicht unter 20% entladen und nicht über 80% geladen werden. Daher sind die in Fig. 6 dargestellten Kennlinien in Block Drehmoment-Berechnung gespeichert. Befindet sich z.B. die Ladeleistung bei 80%, kann die elektrische Maschine E1 bzw. E2 nicht in der Weise als Generator betrieben werden, daß sie den Speicher auflädt. Umgekehrt kann eine elektrische Maschine nicht als Motor betrieben werden, wenn die Ladung im Speicher nur noch 20% beträgt.

Die einzelnen Kennlinienstufen können eine Mehrzahl von Kennlinien aufweisen, zwischen denen umgeschaltet werden kann. Eine solche Umschaltung erfolgt z.B. durch eine manuelle Vorgabe, indem das Signal des Sollwert-Gebers dafür genutzt wird oder auch automatisch unter Berücksichtigung des Signals der Betätigungsgeschwindigkeit-Sollwert-Gebers.

Die Drehmoment-Berechnungsstufe kann eine Unterstufe aufweisen, in der das Soll-Drehmoment für die Elektromaschinen bestimmt und/oder begrenzt wird, die an ein zwangsläufiges Sammelgetriebe oder überbrücktes Überlagerungsgetriebe angeschlossen sind, indem das Soll-Drehmoment der Elektromaschine derart bestimmt wird, daß das Ausgangsdrehmoment des Getriebes dazu dient, daß das Soll-Raddrehmoment den benötigten Wert annimmt, wobei das mögliche Abgabedrehmoment der Brennkraftmaschine BKM, das in der zweiten Kennlinienstufe ermittelt wird, berücksichtigt wird.

Die Drehmoment-Berechnungsstufe kann eine Unterstufe aufweisen, in der das Soll-Drehmoment für die Elektromaschine E1/E2 bestimmt und/oder begrenzt wird, die an ein Überlagerungsgetriebe angeschlossen ist, wobei das Soll-Drehmoment der Elektromaschine derart bestimmt wird, daß die mit dem Getriebeeingang verbundene Brennkraftmaschine BKM bewußt für das mögliche Abgabedrehmoment der BKM, das in der zweiten Kennlinienstufe ermittelt wird, begrenzt wird.

Die Drehmoment-Berechnungsstufe kann eine andere Unterstufe aufweisen, in der die Soll-Drehmomente der an ein erstes Sammelgetriebe angeschlossenen Elektromaschine und der an ein zweites Sammelgetriebe angeschlossenen zweiten Elektromaschine bestimmt oder begrenzt werden, wenn das zwischen den Sammelgetrieben angeordnete Schalt- oder Verstellgetriebe in Neutralstellung geschaltet ist, wobei die von der ersten Elektromaschine generatorisch erzeugte elektrische Leistung in einem seriellen Mode von der zweiten Elektromaschine verbraucht und die mit dem ersten Sammelgetriebe verbundene Brennkraftmaschine nur bis zum möglichen Abgabedrehmoment der BKM, das in der zweiten Kennlinienstufe ermittelt wird, belastet wird.

Die Drehmoment-Berechnungsstufe kann eine weitere Unterstufe aufweisen, in der das Soll-Drehmoment für die Elektromaschine E1/E2 bestimmt und/oder begrenzt wird, die an ein zwangläufiges Sammelgetriebe oder ein überbrücktes Überlagerungsgetriebe angeschlossen ist, indem das Soll-Drehmoment der Elektromaschine derart bestimmt wird, daß das gesamte Ausgangs-Drehmoment des Getriebes alleine von der Elektromaschine E1/E2 erzeugt wird und den zur Erfüllung des Raddrehmoments benötigten Wert annimmt.

Die Drehmoment-Berechnungsstufe kann eine vierte Kennlinienstufe aufweisen, in der zumindest eine Drehmoment-Drehzahl-Kennlinie einer Elektromaschine E1/E2 gespeichert ist. Aus dem Drehzahl-Ist-Wert wird das mögliche Abgabedrehmoment der Elektromaschine bestimmt, gegebenenfalls unter Berücksichtigung des Vergleichs von Soll- und Ist-Drehzahl der Elektromaschine und deren Trägheitsmoment. Die Drehmoment-Berechnungsstufe kann auch eine zweite Drehmoment-Begrenzungsstufe aufweisen, die die Soll-Drehmomente der Elektromaschine E1/E2 auf die der vierten Kennlinienstufe ermittelten Werte begrenzt.

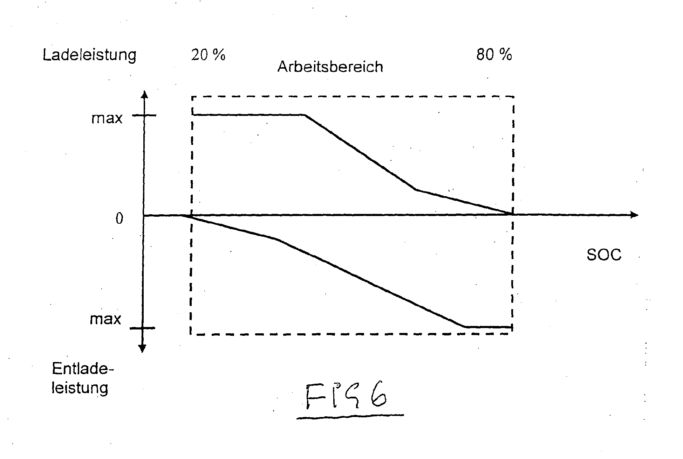

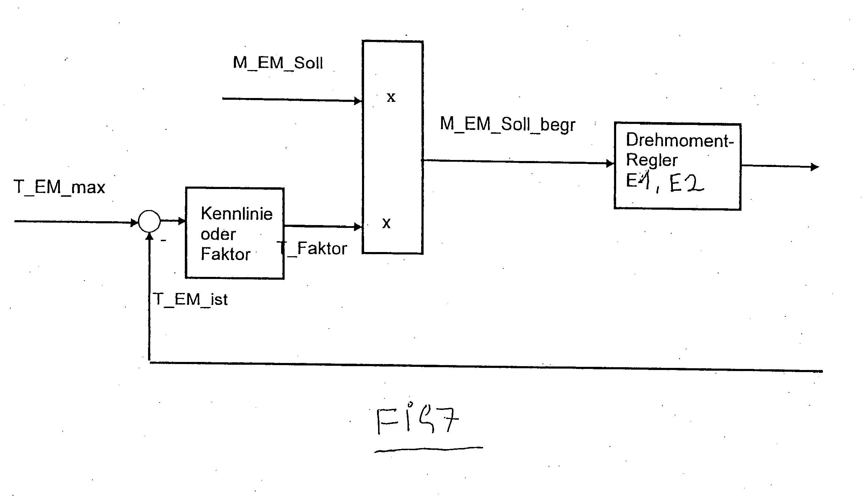

Die Drehmoment-Berechnungsstufe kann eine fünfte Kennlinienstufe aufweisen, in der zumindest eine Temperatur-Verlustleistungs-Kennlinie der Elektromaschine gespeichert ist. Aus dem Elektromotortemperatur-Ist-Wert der Elektromaschine wird die zulässige Verlustleistung bestimmt. Bezüglich dieses Merkmals wird auf Fig. 7 verwiesen. Dort ist ein Vergleich zwischen der gemessenen Temperatur der Elektromaschine T-EM-ist und der maximalen Temperatur T-EM-max vorgenommen. In einem Kennlinien-Block bzw. in einem Faktor-Block wird ein Faktor bestimmt, mit dem das Soll-Moment M-EM-Soll der Elektromaschine multipliziert wird. Es versteht sich, daß dieser stets < 1 ist. Somit ergibt sich ein begrenzter Soll-Wert M-EM-Soll-begr, als Soll-Wert-Vorgabe für den Drehmoment-Regler der Elektromaschine E1 bzw. E2.

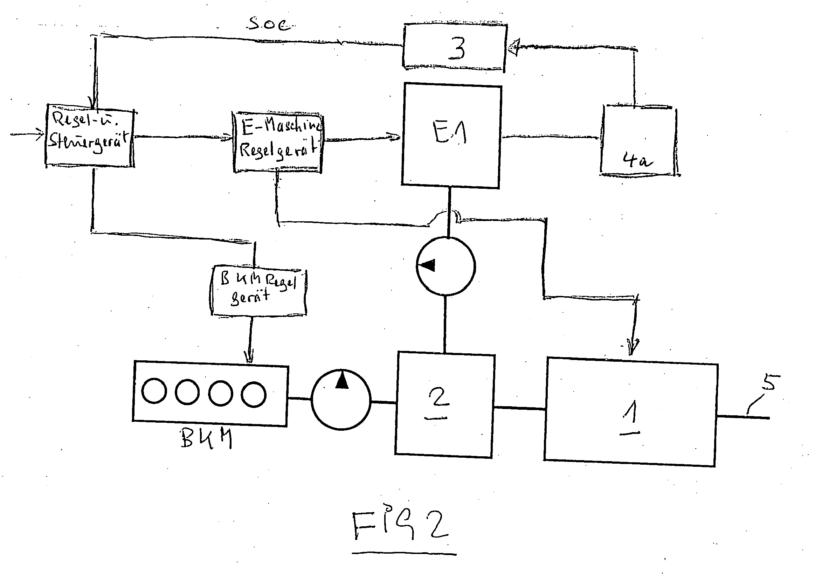

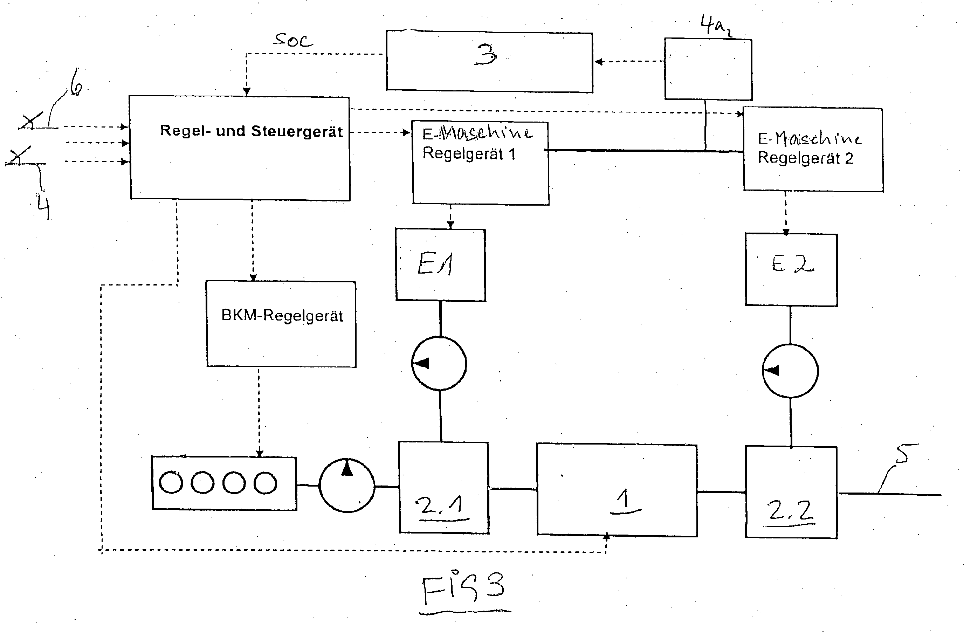

Es ist möglich, an ein derartiges Antriebssystem für ein Flurförderzeug mindestens eine Pumpe zu koppeln, mit der hydraulische Antriebe versorgt werden. Dies ist in Fig. 5 angedeutet. Mit einem weiteren Soll-Wert-Geber 11 wird ein Soll-Wert, z.B. für eine Heben-Funktion in einem Flurförderzeug vorgegeben. Auch hier wird die Geschwindigkeit V-Heben vorgegeben. In einem Getriebemodell wird daraus ein Soll-Wert erzeugt. In einer Stufe Max wird dieser Soll-Wert mit dem Soll-Wert verglichen, der in der Drehmoment-Berechnungsstufe ermittelt und im Motor-Kennlinienfeld in eine Soll-Drehzahl umgewandelt wird. In der Maximalwertstufe Max wird der größere der beiden Drehzahl-Soll-Werte (Fahrfunktion und Arbeitsfunktion) bestimmt und an die Regelvorrichtung für die Drehzahl der Brennkraftmaschine weitergegeben. Die Funktion des Antriebssystems nach Fig. 5 gleicht im übrigen der nach Fig. 4.

Eine Betriebsartwechselstufe zur Überbrückung des Überlagerungsbetriebes kann ebenfalls von einer Steuer- und Regelvorrichtung gesteuert werden, welche die Schaltelemente der Überbrückungseinrichtung steuert. Sie kann zum Trennen bzw. Schließen von Kupplungen und Bremsen ausgelegt sein. Eine weitere Steuer- oder Regelvorrichtung kann die Betätigung des Schaltelemente der Kupplungen und/oder Bremsen steuern. Die Betriebsartwechselstufe kann das Antriebssystem durch Betätigung von Kupplungen und Bremsen in einen seriellen Betrieb schalten, bei dem die von der Brennkraftmaschine BKM erzeugte Leistung rein elektrisch von dem ersten Elektromotor E1, der als Generator arbeitet, auf die zweite Elektromaschine E2, die als Fahrmotor arbeitet, übertragen. Die Betriebsartwechselstufe kann das Antriebssystem durch Betätigen von Kupplungen und Bremsen in einen leistungsverzweigten Betrieb schalten, in dem ein Teil der von Brennkraftmaschine BKM erzeugten Leistung elektrisch von der ersten Elektromaschine E1, die als Generator oder Motor arbeitet, auf die zweite Elektromaschine, die als Motor oder Generator arbeitet, übertragen wird und der andere Teil der Leistung mechanisch auf die Getriebewellen zum Abtrieb übertragen wird. Die Betriebsartwechselstufe kann das Antriebssystem durch Betätigen von Kupplungen und Bremsen in einen parallelen Betrieb schalten, bei dem sich die von der Brennkraftmaschine BKM und von zumindest einer Elektromaschine erzeugte Leistung summieren. Die Betriebsartwechselstufe kann das Antriebssystem durch Betätigen von Kupplungen und Bremsen in einen rein elektrischen Betrieb schalten, wobei die Brennkraftmaschine ausgeschaltet ist. Die verschiedenen Betriebsarten können über unterschiedliche Regler, Kennlinienstufen und Drehmoment-Berechnungsstufen realisiert werden.

Das gezeigte Antriebssystem kann auch eine Betriebsstrategiestufe aufweisen, die aus bestimmten Eingangssignalen und/oder Kennlinien die für den jeweiligen Betriebszustand die vorteilhafteste Betriebsart bestimmt und die nachfolgende Betriebsartwechselstufe ansteuert.

Die Betriebsstrategiestufe kann den Energieverbrauch in den einzelnen Betriebsarten ermitteln und vergleichen und kann Soll-Signale für die Betriebsartwechselstufe erzeugen, um in die günstigste Betriebsart zu wechseln, wobei zur Vermeidung von Pendelschaltungen Hysteresen vorgesehen sind.

Die Betriebsartwechselstufe kann Zustandsgrößen des Antriebssystems mit Umschaltbedingungen vergleichen und Vorgaben an die Steuer- bzw. Regelvorrichtungen der Schaltelemente der Getriebe, der Kupplungen und der Überbrückungseinrichtung senden.

## Patentansprüche

1. Vorrichtung zur Regelung eines Hybrid-Antriebssystems für ein Kraftfahrzeug, insbesondere ein Flurförderzeug, mit einer Brennkraftmaschine BKM, einem Speicher für elektrische Energie, einer Vorrichtung zur Erfassung des Ladezustands SOC des Speichers, mindestens einer Elektromaschine E1/E2, die mit dem elektrischen Speicher verbindbar ist und mindestens einer Getriebeanordnung, über die die Brennkraftmaschine BKM, die Elektromaschine E1/E2 und mindestens ein Rad des Fahrzeugs miteinander koppelbar sind, **gekennzeichnet durch** folgende Merkmale
- ein Soll-Wert-Geber für die Fahrgeschwindigkeit v, der ein Soll-Signal für die Soll-Fahrgeschwindigkeit vorgibt;
- ein Ist-Wert-Geber für die Fahrgeschwindigkeit v, der ein Ist-Signal aus der Fahrgeschwindigkeit erzeugt;
- eine erste Regelvorrichtung für die Fahrgeschwindigkeit v. in der der Fahrgeschwindigkeits-Soll-Wert mit dem Fahrgeschwindigkeit-Ist-Wert verglichen wird und ein Geschwindigkeitsregler, der ein Soll-Rad-Drehmoment ermittelt;
- eine der ersten Regelvorrichtung nachgeschaltete Drehmoment-Berechnungsstufe, die aus dem Soll-Antriebsmoment M-soll oder einem diesem entsprechenden Signal den kinematischen Bedingungen der Getriebeanordnung und der dazu gegebenenfalls benötigten Ist-Drehzahl der Elektromaschine E1/E2 und/oder der Fahrgeschwindigkeit v, die Drehmoment-Soll-Werte für die Brennkraftmaschine BKM sowie die Soll-Werte für die Elektromaschine E1/E2 bestimmt;
- eine erste Kennlinienstufe mit mindestens einer Kennlinie, die den Drehmoment-Soll-Werten der Brennkraftmaschine annähernd optimale Drehzahlen zuordnet und ein Soll-Signal für die Drehzahl der Brennkraftmaschine vorgibt;
- eine zweite Regelvorrichtung mit einem Vergleich der Soll- und Ist-Werte für die Brennkraftmaschine BKM, die die Brennkraftmaschine BKM derart ansteuert, daß die Regelabweichungen hinreichend klein werden, und
- eine dritte Regelvorrichtung mit einem Vergleich der Soll- und Ist-Werte der Drehmomente bzw. Ströme der Elektromaschine E1/E2, die die Elektromaschine E1/E2 derart ansteuert, daß die Regelabweichungen hinreichend klein werden.

2. Vorrichtung nach Anspruch 1, **dadurch gekennzeichnet, daß** die Getriebeanordnung mindestens ein Schalt- oder Verstellgetriebe (2) aufweist, dessen Eingang mit der Abtriebswelle der Brennkraftmaschine BKM und dessen Ausgang mit der Abtriebswelle (5) gekoppelt ist und daß mindestens ein erstes Sammelgetriebe (1) vorgesehen ist, dessen Eingänge mit der Abtriebswelle des Schalt- oder Verstellgetriebes (2) und der Abtriebswelle der Elektromaschine E1 gekoppelt sind und dessen Ausgang mit der Abtriebswelle (5) des Antriebssystems gekoppelt ist.

3. Vorrichtung nach Anspruch 1, **dadurch gekennzeichnet, daß** die Getriebeanordnung mindestens ein erstes Sammelgetriebe (2) aufweist, dessen Eingänge mit der Abtriebswelle der Brennkraftmaschine BKM und der Abtriebswelle der Elektromaschine E1 gekoppelt sind und dessen Ausgang mit der Abtriebswelle (5) des Antriebssystems gekoppelt ist und das mindestens ein Schalt- oder Verstellgetriebe (1) im Zuge der Abtriebswelle (5) aufweist.

4. Vorrichtung nach Anspruch 1, **dadurch gekennzeichnet, daß** die Getriebeanordnung ein erstes Sammelgetriebe (2.1) aufweist, dessen Eingänge mit der Abtriebswelle der Brennkraftmaschine BKM und der Abtriebswelle eine erste Elektromaschine E1 gekoppelt sind und dessen Ausgang mit der Abtriebswelle (5) des Antriebssystems gekoppelt ist und mindestens ein Schalt- oder Verstellgetriebe (1) aufweist, dessen Eingang mit der Abtriebswelle des ersten Sammelgetriebes (2.1) gekoppelt ist und ein zweites Sammelgetriebe (2.2) aufweist, dessen Eingänge mit der Abtriebswelle des Schalt- oder Verstellgetriebes (1) und der Abtriebswelle einer zweiten Elektromaschine E2 gekoppelt sind und dessen Ausgang mit der Abtriebswelle (5) des Systems gekoppelt ist.

5. Vorrichtung nach einem der Ansprüche 1 bis 4, **dadurch gekennzeichnet, daß** die erste Kennlinienstufe mindestens eine weitere Kennlinie aufweist, die den Fahrgeschwindigkeits-Soll-Werten Soll-Drehzahlen der Brennkraftmaschine BKM zuordnet, wobei die aus den einzelnen Kennlinien ermittelten Soll-Drehzahl-Werte für die Brennkraftmaschine BKM miteinander verknüpft werden zur Ermittlung eines endgültigen Soll-Drehzahl-Werts für die Brennkraftmaschine BKM.

6. Vorrichtung nach Anspruch 5, **dadurch gekennzeichnet, daß** die Verknüpfung eine Addition ist.

7. Vorrichtung nach einem der Ansprüche 1 bis 4, **dadurch gekennzeichnet, daß** die erste Kennlinienstufe mindestens ein Kennfeld beinhaltet, das WertePaaren von Fahrgeschwindigkeits-Soll-Werten und Drehmoment-Soll-Werten der Brennkraftmaschine BKM annähernd optimale Drehzahlen zuordnet für die Erzeugung eines Soll-Signals für die Drehzahl der Brennkraftmaschine BKM.

8. Vorrichtung nach einem der Ansprüche 1 bis 7, **dadurch gekennzeichnet, daß** in der ersten Kennlinienstufe mindestens ein Drehzahl-Drehmoment-Wirkungsgrad-Kennfeld für die Elektromaschine E1/E2 gespeichert ist und bei der Ermittlung der Drehzahl-Soll-Werte für die Brennkraftmaschine BKM berücksichtigt wird.

9. Vorrichtung nach einem der Ansprüche 2 bis 5, **dadurch gekennzeichnet, daß** in der ersten Kennlinienstufe mindestens ein Drehzahl-Drehmoment-Wirkungsgrad-Kennfeld für das Schalt- oder Verstellgetriebe (1) gespeichert ist, das bei Ermittlung der Drehzahl-Soll-Werte für die Brennkraftmaschine BKM berücksichtigt wird.

10. Vorrichtung nach einem der Ansprüche 1 bis 9, **dadurch gekennzeichnet, daß** eine Begrenzungsstufe zwischen dem Soll-Wert-Geber und der ersten Regelvorrichtung geschaltet ist für eine Änderung des Fahrgeschwindigkeits-SollWertes v-soll-roh und/oder Begrenzung auf einstellbare bzw. vorgegebene Werte (Rampengenerator).

11. Vorrichtung nach einem der Ansprüche 1 bis 10, **dadurch gekennzeichnet, daß** eine zweite Kennlinienstufe vorgesehen ist, in der zumindest eine Drehmoment-Drehzahl-Kennlinie der Brennkraftmaschine BKM gespeichert ist zur Bestimmung eines möglichen Abgabe-Drehmoments der Brennkraftmaschine aus dem Drehzahl-Ist-Wert der Brennkraftmaschine gegebenenfalls unter Berücksichtigung des Vergleichs von Soll- und Ist-Drehzahl der Brennkraftmaschine BKM und deren Trägheitsmoment.

12. Vorrichtung nach einem der Ansprüche 1 bis 11, **dadurch gekennzeichnet, daß** die erste und/oder zweite Kennlinienstufe eine Umschaltung beinhaltet zur Umschaltung zwischen den Kennlinien.

13. Vorrichtung nach Anspruch 12, **dadurch gekennzeichnet, daß** die Umschaltung durch manuelle Vorgabe oder durch das Fahrgeschwindigkeits-Signal des Soll-Wert-Gebers (4) und/oder dessen Betätigungs-Geschwindigkeit erfolgt.

14. Vorrichtung nach einem der Ansprüche 1 bis 13, **dadurch gekennzeichnet, daß** die Drehmoment-Berechnungsstufe mindestens eine Unterstufe aufweist, in der das Soll-Drehmoment für die Elektromaschine E1/E2 bestimmt und/oder begrenzt wird ggf. unter Berücksichtigung des Wirkungsgrades der Elektromaschine, die an ein zwangsläufiges Sammelgetriebe (2.1, 2.2) oder ein überbrücktes Überlagerungsgetriebe angeschlossen ist, indem das Soll-Drehmoment der Elektromaschine E1/E2 derart bestimmt wird, daß das Ausgangs-Drehmoment des Getriebes den zur Erfüllung des Rad-Drehmoments benötigten Wert annimmt, wobei das mögliche Abgabe-Drehmoment der Brennkraftmaschine BKM, das in der zweiten Kennlinienstufe ermittelt wird, berücksichtigt wird.

15. Vorrichtung nach einem der Ansprüche 1 bis 13, **dadurch gekennzeichnet, daß** die Drehmoment-Berechnungsstufe zumindest eine Unterstufe aufweist, in der das Soll-Drehmoment für die Elektromaschine E1/E2 bestimmt und/oder begrenzt wird, die an ein Überlagerungsgetriebe angeschlossen ist, wobei das Soll-Drehmoment der Elektromaschine E1/E2 derart bestimmt wird, daß die mit dem Getriebeeingang verbundene Brennkraftmaschine BKM nur bis zum möglichen Abgabedrehmoment der BKM, das in der zweiten Kennlinienstufe ermittelt wird, belastet wird.

16. Vorrichtung nach einem der Ansprüche 1 bis 13, **dadurch gekennzeichnet, daß** die Drehmoment-Berechnungsstufe mindestens eine Unterstufe aufweist, in der die Soll-Drehmomente der an ein erstes zwangsläufiges Sammelgetriebe (2.1) oder überbrücktes Überlagerungsgetriebe angeschlossenen Elektromaschine E1 und der an ein zweites zwangsläufiges Sammelgetriebe (2.2) angeschlossenen zweiten Elektromaschine E2 bestimmt und/oder begrenzt werden, wenn das zwischen den Sammelgetrieben (2.1, 2.2) angeordnete Schalt- oder Verstellgetriebe (1) in Neutralstellung geschaltet ist, wobei die von der ersten Elektromaschine E1 generatorisch erzeugte elektrische Leistung in einem seriellen Mode von der zweiten Elektromaschine E2 verbraucht und die mit dem ersten Sammelgetriebe (2.1) verbundene Brennkraftmaschine BKM nur bis zum möglichen Abgabe-Drehmoment der Brennkraftmaschine BKM, das in der zweiten Kennlinienstufe ermittelt wird, belastet wird.

17. Vorrichtung nach einem der Ansprüche 1 bis 13, **dadurch gekennzeichnet, daß** die Drehmoment-Berechnungsstufe zumindest eine Unterstufe aufweist, in der das Soll-Drehmoment für eine Elektromaschine E1/E2 bestimmt und/oder begrenzt wird, die an ein zwangsläufiges Sammelgetriebe oder ein überbrücktes Überlagerungsgetriebe angeschlossen ist, indem das Soll-Drehmoment der Elektromaschine E1/E2 derart bestimmt wird, daß das gesamte Ausgangs-Drehmoment des Getriebes allein von der Elektromaschine E1/E2 erzeugt wird und den zur Erfüllung des Rad-Drehmoments benötigten Wert annimmt.

18. Vorrichtung nach einem der Ansprüche 1 bis 17, **dadurch gekennzeichnet, daß** eine dritte Kennlinienstufe aus dem Ladezustand SOC des elektrischen Speichers ein Signal für die zulässige Lade- oder Entladeleistung des elektrischen Speichers erzeugt.

19. Vorrichtung nach Anspruch 18, **dadurch gekennzeichnet, daß** das Signal der Lade- und Entladeleistung des elektrischen Speichers in die Drehmoment-Berechnungsstufe gegeben wird.

20. Vorrichtung nach Anspruch 19, **dadurch gekennzeichnet, daß** für die Berechnung der Soll-Drehmomente der Elektromaschine E1/E2 die Lade- und Entladeleistung des elektrischen Speichers in einen Wert für eine Dauerleistung und einen Wert für eine kurzzeitige Leistung geteilt wird, wobei die Kompensation der Differenz des Soll-Drehmoments und des möglichen Abgabe-Drehmoments der Brennkraftmaschine BKM mit dem Wert für eine kurzzeitige Lade- und Entladeleistung erfolgt.

21. Vorrichtung nach einem der Ansprüche 1 bis 20, **dadurch gekennzeichnet, daß** in einer vierten Kennlinienstufe zumindest eine Drehmoment-Drehzahl-Kennlinie für eine Elektromaschine E1/E2 gespeichert ist und aus dem Drehzahl-Ist-Wert der Elektromaschine E1/E2 das mögliche Abgabe-Drehmoment der Elektromaschine bestimmt wird gegebenenfalls unter Berücksichtigung des Vergleichs von Soll- und Ist-Drehzahl der Elektromaschine E1/E2 und deren Trägheitsmoment.

22. Vorrichtung nach Anspruch 21, **dadurch gekennzeichnet, daß** die Drehmoment-Berechnungsstufe eine zweite Drehmoment-Begrenzungsstufe auf weist, die die Soll-Drehmomente der Elektromaschinen E1/E2 auf die in der vierten Kennlinienstufe ermittelten Werte begrenzt.

23. Vorrichtung nach einem der Ansprüche 1 bis 22, **dadurch gekennzeichnet, daß** die Drehmoment-Berechnungsstufe eine fünfte Kennlinienstufe aufweist, in der zumindest eine Temperatur-Verlustleistungs-Kennlinie der Elektromaschine E1/E2 gespeichert ist und aus dem Elektromotortemperatur-Ist-Wert der Elektromaschine E1/E2 die zulässige Verlustleistung bestimmt wird.

24. Vorrichtung nach Anspruch 23, **dadurch gekennzeichnet, daß** die Drehmoment-Berechnungsstufe eine sechste Kennlinienstufe aufweist, in der zumindest ein Drehmoment-Drehzahl-Verlustleistungs-Kennfeld der Elektromaschine E1/E2 gespeichert ist und aus dem Drehzahl-Ist-Wert und der fünften Kennlinienstufe ermittelten zulässigen Verlustleistung das zulässige Drehmoment der Elektromaschine E1/E2 bestimmt wird.

25. Vorrichtung nach Anspruch 21 und 24, **dadurch gekennzeichnet, daß** in der zweiten Drehmoment-Begrenzungsstufe die Soll-Drehmomente der Elektromaschine E1/E2 auf die in der sechsten Kennlinienstufe ermittelten Werte begrenzt werden.

26. Vorrichtung nach einem der Ansprüche 22 bis 25, **dadurch gekennzeichnet, daß** in der zweiten Drehmoment-Begrenzungsstufe die zulässige Verlustleistung der Elektromaschine E1/E2 bestimmt wird, in dem die Ist-Motortemperatur gemessen und berechnet und mit einer zulässigen Maximaltemperatur verglichen wird und daraus, gegebenenfalls mittels einer Kennlinie, ein Begrenzungsfaktor für das Soll-Drehmoment bestimmt wird und das zulässige Soll-Drehmoment der Elektromaschine E1/E2 entsprechend begrenzt wird.

27. Vorrichtung nach einem der Ansprüche 2 bis 26, **dadurch gekennzeichnet, daß** eine Hohlwellen-Elektromaschine E1/E2 direkt mit einer Getriebewelle verbunden ist.

28. Vorrichtung nach einem der Ansprüche 1 bis 27, **dadurch gekennzeichnet, daß** die erste Kennlinienstufe Soll-Drehzahlen für eine erste oder zweite Elektromaschine E1/E2 bestimmt, in der zweiten Regelvorrichtung das Drehmoment der Brennkraftmaschine BKM geregelt und in der dritten Regelvorrichtung die Drehzahl der einen sowie das Drehmoment der anderen Elektromaschine E1/E2 geregelt wird.

29. Vorrichtung nach einem der Ansprüche 1 bis 28, **dadurch gekennzeichnet, daß** eine Vorrichtung zur Messung des Ladezustands des elektrischen Speichers, beispielsweise der Messung der Ruhespannung, vorgesehen ist.

30. Vorrichtung nach Anspruch 29, **dadurch gekennzeichnet, daß** eine Vorrichtung zum Abgleich des berechneten Ladezustands mit dem gemessenen Ladezustand vorgesehen ist.

31. Vorrichtung nach einem der Ansprüche 1 bis 30, **dadurch gekennzeichnet, daß** eine vierte Regelvorrichtung die Betätigung der Schaltelemente des Schalt- oder Verstellgetriebes (1) steuert.

32. Vorrichtung nach einem der Ansprüche 2 bis 31, **dadurch gekennzeichnet, daß** eine Betriebsartwechselstufe zur Überbrückung des Überlagerungsgetriebes vorgesehen ist und eine fünfte Steuer- oder Regelvorrichtung die Betätigung der Schaltelemente der Überbrückungseinrichtung steuert.

33. Vorrichtung nach Anspruch 32, **dadurch gekennzeichnet, daß** die Betriebsartwechselstufe zum Trennen bzw. Schließen von Kupplungen und Bremsen ausgelegt ist und eine sechste Steuer- und Regelvorrichtung die Betätigung der Schaltelemente der Kupplungen oder Bremsen steuert.

34. Vorrichtung nach Anspruch 32 oder 33, **dadurch gekennzeichnet, daß** die Betriebsartwechselstufe das Antriebssystem durch Betätigung von Kupplungen und Bremsen in ein seriellen Betrieb schaltet, bei dem die von der Brennkraftmaschine BKM erzeugte Leistung rein elektrisch von der ersten Elektromaschine, die als Generator arbeitet auf die zweite Elektromaschine, die als Fahrmotor arbeitet, übertragen wird.

35. Vorrichtung nach einem der Ansprüche 42 bis 34, **dadurch gekennzeichnet, daß** die Betriebsartwechselstufe das Antriebssystem durch Betätigung von Kupplungen und Bremsen in ein leistungsverzweigten Betrieb schaltet, bei dem ein Teil der von der Brennkraftmaschine BKM erzeugten Leistung elektrisch von der ersten Elektromaschine, die als Generator bzw. Motor arbeitet, auf die zweite Elektromaschine, die als Motor oder Generator arbeitet, übertragen wird und der andere Teil der Leistung mechanisch auf die Getriebewellen zur Abtriebswelle (5) übertragen wird.

36. Vorrichtung nach einem der Ansprüche 32 bis 34, **dadurch gekennzeichnet, daß** die Betriebsartwechselstufe des Antriebssystems durch Betätigung von Kupplungen und Bremsen in einen Parallelbetrieb schaltet, bei dem die von der Brennkraftmaschine BKM und von zumindest einer Elektromaschine E1/E2 erzeugte Leistung summieren.

37. Vorrichtung nach einem der Ansprüche 32 bis 34, **dadurch gekennzeichnet, daß** die Betriebsartwechselstufe des Antriebssystems durch Betätigen von Kupplungen und Bremsen in einen rein elektrischen Betrieb schaltet, wobei die Brennkraftmaschine BKM ausgeschaltet ist.

38. Vorrichtung nach einem der Ansprüche 32 bis 37, **dadurch gekennzeichnet, daß** die Betriebsartwechselstufe beim Übergang von einer Betriebsart in die andere den Sollwert der Brennkraftmaschine BKM so verändert, daß der Übergang weitgehend stoßfrei erfolgt.

39. Vorrichtung nach einem der Ansprüche 32 bis 37, **dadurch gekennzeichnet, daß** für die verschiedenen Betriebsarten unterschiedliche Regler, Kennlinienstufen und Drehmoment-Berechnungsstufen vorgesehen sind.

40. Vorrichtung nach einem der Ansprüche 32 bis 39, **dadurch gekennzeichnet, daß** eine Betriebsstrategiestufe vorgesehen ist, die aus Eingangssignalen die für den jeweiligen Betriebszustand die vorteilhafteste Betriebsart bestimmt und die nachfolgende Betriebsartwechselstufe ansteuert.

41. Vorrichtung nach Anspruch 40, **dadurch gekennzeichnet, daß** die Betriebsstrategiestufe den Energieverbrauch in den einzelnen Betriebsarten ermittelt und vergleicht und Soll-Signale für die Betriebsartwechselstufe erzeugt, um in die verbrauchsgünstigste Betriebsart zu wechseln, wobei zur Vermeidung von Pendelschaltungen Hysteresen vorgesehen sind.

42. Vorrichtung nach Anspruch 40 oder 41, **dadurch gekennzeichnet, daß** die Betriebsstrategiestufe entscheidet aufgrund der Betriebsart und des Ladezustandes SOC des Speichers gemäß den Kennlinien der dritten Kennlinienstufe, ob der Speicher geladen oder entladen wird.

43. Vorrichtung nach einem der Ansprüche 32 bis 42, **dadurch gekennzeichnet, daß** in der Betriebsartwechselstufe Zustandsgrößen des Antriebssystems mit Umschaltbedingungen verglichen und Vorgaben an die Steuer- und Regelvorrichtungen der Schaltelemente der Getriebe, der Kupplungen und der Überbrückungseinrichtung gesendet werden.

44. Vorrichtung nach einem der Ansprüche 1 bis 43, **dadurch gekennzeichnet, daß** weitere Pumpen vorgesehen sind, die an unterschiedlichen Getriebewellen angebracht sind, wobei aus dem von einem Bedienelement für die Vorgabe der Soll-Geschwindigkeit der Arbeitsfunktion (z.B. Hubgeschwindigkeit) erhaltenen Signal in einer Berechnungsstufe mit den kinematischen Bedingungen des Getriebes und den Ist-Drehzahlen der Elektromotoren der Drehzahl-Soll-Wert für die Brennkraftmaschine BKM bestimmt wird.

45. Vorrichtung nach Anspruch 44, **dadurch gekennzeichnet, daß** in einer Maximalwertstufe der größere der beiden Drehzahl-Soll-Werte (Fahrfunktion und Arbeitsfunktion) bestimmt und an die Regelvorrichtung für die Drehzahl der Brennkraftmaschine BKM weitergegeben wird.
